# EUROPEAN PATENT APPLICATION

(11) **EP 0 928 117 A2**
(43) Date of publication of application: **07.07.1999**
(21) Application number: 98310581.8
(22) Date of filing: 22.12.1998
(51) Int. Cl.: H04N 13/04

(54) **Method and apparatus for providing volumetric projection**

(30) Priority: 23.12.1997 US 997091
(71) Applicant: NORTHERN TELECOM LIMITED, Montreal, Quebec H2Y 3Y4 (CA)
(72) Inventor: Talbott, Douglas E, Kanata, Ontario K2K 1T9 (CA); Blouin, Francois, Hull, Quebec J9A 2Y5 (CA); Moxon, Blair, Kanata, Ontario K2L 3A5 (CA)
(74) Representative: Bewley, Ewan Stuart

(57) **Abstract**

An apparatus displays an image [140] in three-dimensional virtual space in a form that may be modified by a user using an interface device [500]. The apparatus divides computer-generated data representing 3D images into data subsets representing two-dimensional slices of the 3D image. The apparatus displays each image slice on a layer in a stack of liquid crystal displays (LCD) [210-219]. The stack sequentially displays the layers of the image at a fast rate to appear as a single 3D -image [140]. Each layer in the stack has a dedicated driver and memory. The apparatus includes a reflector [400] for reflecting the 3D image in a manner so as to produce a virtual image in unsurrounded space capable of being viewed from every direction. Spectators may use a user interface device [500] to touch or manipulate the virtual image. The user interface device [500] transmits data to the apparatus, which generates data to modify the virtual image.

## Description

### BACKGROUND OF THE INVENTION

The present invention relates to methods and apparatus for displaying an image in three-dimensional physical space and manipulating the image using an interface device. More specifically, the present invention allows computer-generated images to be projected into three-dimensional space and then subsequently touched or manipulated by a human being using a haptic-touch device.

Volumetric projection is technology that allows three-dimensional (3D) objects to be projected so that they appear to float in mid-air. Volumetric projection technology with human interactive capability has vast implications for a host of 3D-based applications such as computer-aided design/computer-aided manufacturing (CAD/CAM), industrial design teleconferencing, and computer network management. Other applications may include virtual prototyping of new products, tele-medical applications such as medical training tools, and virtual desktop display monitors.

True 3D imaging systems take into account the way humans perceive 3D objects and rely on both psychological and physiological depth cues to interpret the visual information. The physiological depth cues are accommodation. convergence, binocular parallax, and movement parallax. The psychological depth cues are retinal image size, linear perspective, texture gradient, overlapping, aerial perspective, and shades and shadows. Scientists generally agree that superior 3D display devices would provide some or all of these characteristics. This is observed in the article entitled "Direct Volume Display Devices" by T. L. Clifton et al., Computer Graphics and Applications, vol. 13, no. 4, pp. 57-65, July 1993, the contents of which are hereby incorporated by reference.

There have been many attempts to display realistic, interactive 3D images, all of which suffer drawbacks. For example, some conventional devices display 3D information on a 2D screen and rely on techniques such as overlapping, linear perspective (making objects in the distance appear smaller), and shading to simulate depth. Adding depth cues in this manner is computationally intensive and the resulting images still can be viewed only from one direction for the 3D effect. The more powerful physiological depth cues, such as accommodation, convergence, and binocular disparity, cannot be used in these instances, making it difficult for human beings to perceive, interpret, and ultimately understand the visual image. Furthermore, because these images are restricted to a screen, it is impossible to interact with them in a truly 3D sense.

Virtual objects are computer-generated images that are projected into the user's environment. Because they provide many of the depth cues, virtual objects, for better or worse, allow people to apply their existing senses, their sense of physical space, and social rules to interact with the objects.

Some conventional devices, such as head-tracking technologies, produce virtual objects but require the use of encumbering hardware, such as polarizing glasses or head gear. In stereoscopic display devices of this type, two views of an object are displayed to the right and left eyes of an wearing specially outfitted glasses. Besides the obvious drawback of requiring bulky headgear, head-tracking technologies necessitate intensive calculations for determining and synchronizing the view for each eye for every angle.

Still other existing technologies project objects into 3D space within an enclosed space, thereby hampering spectator interaction. Direct Volume Display Devices (DVDDs), for example, display 3D images by projecting multiple invisible infra-red laser beams through an enclosure that contains a reflecting material such as a gas or a rotating helix. While, the enclosure surrounding the 3D images is necessary to separate the spectators from harmful moving parts or confine the gas, it prevents spectators from touching or otherwise interacting directly with the 3D image.

As is apparent from the above-described deficiencies with conventional systems, a need exists for a method and apparatus that presents a realistic 3D image with both the physiological and psychological depth cues.

A further need exists for a method and apparatus for displaying 3D images so that they may be viewed from all sides.

Yet another need exists for a method and apparatus that projects the object into 3D space without an enclosure around the object.

An additional need exists for a method and apparatus that projects into unsurrounded space a 3D image that is fully referenceable.

A still further need exists for a method and apparatus that allows spectators to interact with the 3D image.

### SUMMARY OF THE INVENTION

To address these concerns and limitations, methods for displaying a three-dimensional image comprise receiving a first set of data representing a three-dimensional image; projecting a first plurality of light beams based upon the first set of data onto a reflective device; and reflecting the light beams to focal points above the reflecting device in a manner to display a referenceable three-dimensional image in unsurrounded space.

Additionally, a method of displaying a three-dimensional image comprises receiving a first set of data representing a three-dimensional image; dividing the first set of data into a first plurality of data subsets, each data subset corresponding to a two-dimensional slice of the three-dimensional image; projecting a first plurality of light beams onto a reflective device in accordance with the first plurality of data subsets; and reflecting the first plurality of light beams to focal points beyond the reflective device to display a referenceable three-dimensional image in unsurrounded space.

Additionally, a method of displaying a three-dimensional image comprises receiving a first set of data representing a three-dimensional image; dividing the first set of data into a first plurality of data subsets, each data subset corresponding to a two-dimensional slice of the three-dimensional image; activating a plurality of light beams based upon the first plurality of data subsets; and projecting the plurality of light beams to focal points to display a referenceable three-dimensional image in unsurrounded space.

Furthermore, an image display apparatus comprises a device for receiving a first set of data representing a three-dimensional image; a first projector for projecting a first plurality of light beams onto a reflective device based upon the first set of data; and a device for reflecting the light beams to focal points above the reflecting device in a manner to display a referenceable three-dimensional image in unsurrounded space.

Additional advantages of the invention will be set forth in part in the description that follows and in part will be obvious from the description or may be learned by practice of the invention. The advantages of the invention will be realized and attained by means of the elements and combinations particularly pointed out in the appended claims. Both the foregoing general description and the following detailed description are exemplary and explanatory only, and are not restrictive of the invention as claimed.

### BRIEF DESCRIPTION OF THE DRAWINGS

The accompanying drawings, which are incorporated in and constitute a part of the specification, illustrate presently preferred embodiments of the invention and, together with the general description given above and the detailed description of a preferred embodiments given below, explain the principles of the invention.

Fig. 1 illustrates one embodiment of the apparatus of the invention.

Fig. 2 illustrates display device 200 of Fig. 1.

Fig. 3 is a block diagram illustrating display controller 300 of Fig. 1.

Fig. 4 shows reflector 400 of Fig. 1.

Figs. 5A-5B contain a flow diagram of a method for displaying a 3D image according to the present invention.

Fig. 6 shows the reflection process when reflector 400 is a pair of concave mirrors 410 and 420 as shown in Fig. 4.

### DETAILED DESCRIPTION OF THE INVENTION

### A. Introduction

Reference will now be made in detail to preferred embodiments of the invention, examples of which are illustrated in the accompanying drawings. Wherever possible, the same reference numbers will be used throughout the drawings to refer to the same or like parts.

Consistent with the invention, a system generates a 3D image and cuts it into a series of image slices. The system transmits data representing the image slices to a display controller that sequentially displays the image slices on a stack of two-dimensional arrays. A reflector of the system reflects the image to create a virtual image that appears to be floating in mid-air. A spectator uses an interface device to touch and manipulate the virtual image. The interface device generates data and transmits the data to a processor of the system. which is used to compute and affect changes in the virtual image.

### B. System Components

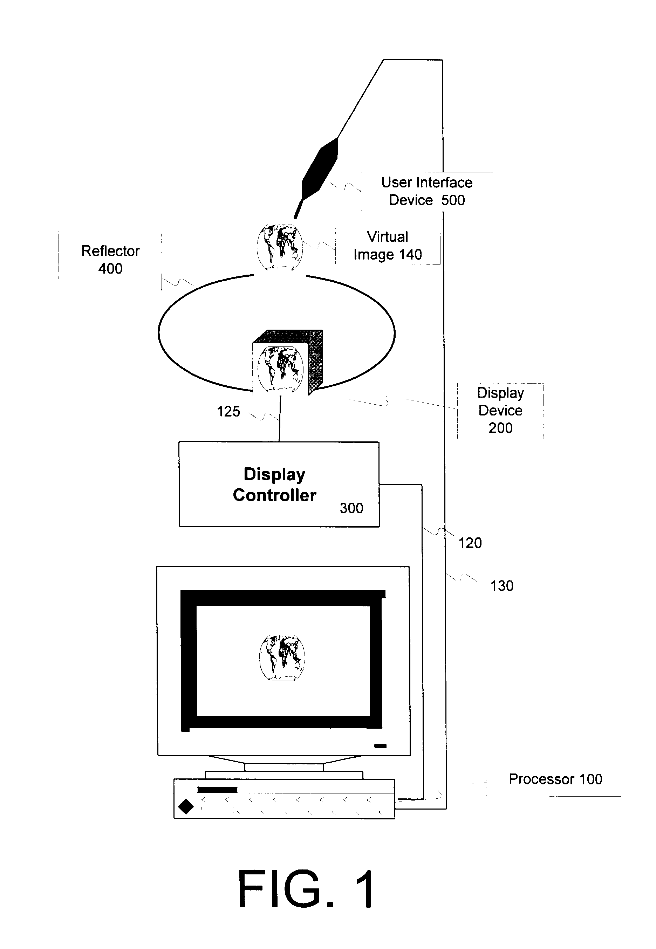

Fig. 1 illustrates the components of a system consistent with the present invention. Generally, the system includes processor 100, display device 200, display controller 300, reflector 400, and user interface device 500. Processor 100 is connected to display controller 300 via standard data bus 120 and is connected to user interface device 500 via standard data bus 130. Display device 200 is connected to display controller 300 via standard data bus 125.

Processor 100 is shown in Fig. 1 as a conventional personal computer. Processor 100 preferably comprises a processor with sufficient memory and processing capability to perform the disclosed functionality. Processor 100 may also comprise one or more input/output devices such as a mouse, keyboard. or display terminal.

Display device 200 is a 3D imaging device capable of displaying a 3D image in three coordinate planes in a fully referenceable form. The term "referenceable" is used to describe an image that is displayed so that a spectator can reference any of the x, y, and z coordinates of the image. Referenceable images also maintain a fixed position when viewed from varying positions surrounding the display.

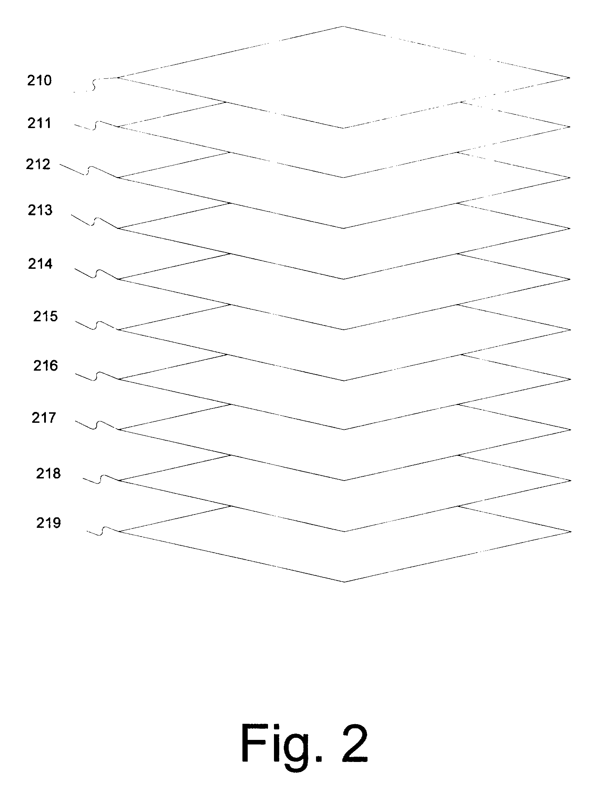

Fig. 2 illustrates display device 200 in accordance with one embodiment of the invention. As shown in Fig. 2. display device 200 is a stack of two-dimensional arrays 210 - 219. Each array preferably comprises one or more light elements 265, each light element being capable of emitting a beam of light. For example. in a preferred embodiment, each of arrays 210 - 219 contains a plurality of gray scale liquid crystal display (LCD) light elements 265, or pixels. While the arrays in Fig. 2 are shown as mounted on top of one another in a stack, the arrays may also be arranged side-by-side. Each array is addressable along the z axis and the pixels in an array are addressable along the x and y axes. While the number of arrays shown in the stack of Fig. 2 is ten, the number of arrays can be more or less. Configurations using a more closely packed array will yield a finer referenceable resolution. Alternatively, display device 200 could comprise other types of conventional display devices such as an earth-doped crystal display as described in "3D in a Cube" by Robin Yeary printed in IEEE Computer Graphics and Applications, Nov. 1996, vol. 16, no. 16, or the LCD display described in U.S. Patent No. 5, 113,272 to Reamey.

As mentioned earlier, in a preferred embodiment, arrays 210 - 219 are implemented using LCDs. LCDs require an external light source 360 to illuminate the pixels. LCDs have two distinct modes of operation. In the 'off' state, the LCD is transparent. In that mode the light flows through the LCD with minimal absorption. In the 'on' state, the image slice information is presented on the LCD and the appropriate pixels are activated.

In an alternative embodiment, each array is a matrix of light emitting diodes, or LEDs. An LED emits light when a current is passed through it. A configuration using LEDs instead of LCDs would be essentially the same except that the LED configuration would not require light source 360. Furthermore, LEDs typically have a large pixel size than LCDs and may be preferred in some applications.

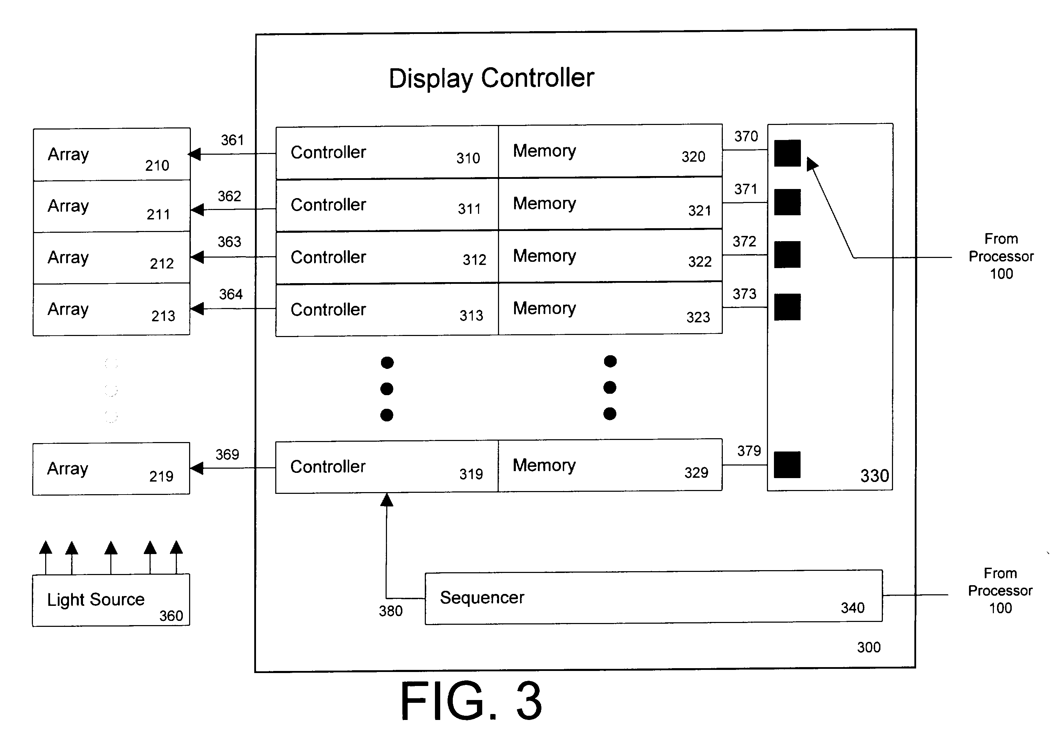

Fig. 3 shows display controller 300 in accordance with a preferred embodiment of the present invention. Display controller 300 comprises drivers 310-319, memories 320- 329, multiplexer 330, and sequencer 340. Each driver and memory in display controller 300 is associated with a particular array in display device 200. Driver 310, for example, controls the operation of array 210; driver 311 controls the operation of array 211. Each driver and memory is also connected to an array in display device 200 via one or more standard data bus 361 - 369. Sequencer 340 is preferably a custom programmable application specific integrated circuit (ASIC) and is capable of controlling drivers 310-319 via standard data bus 380.

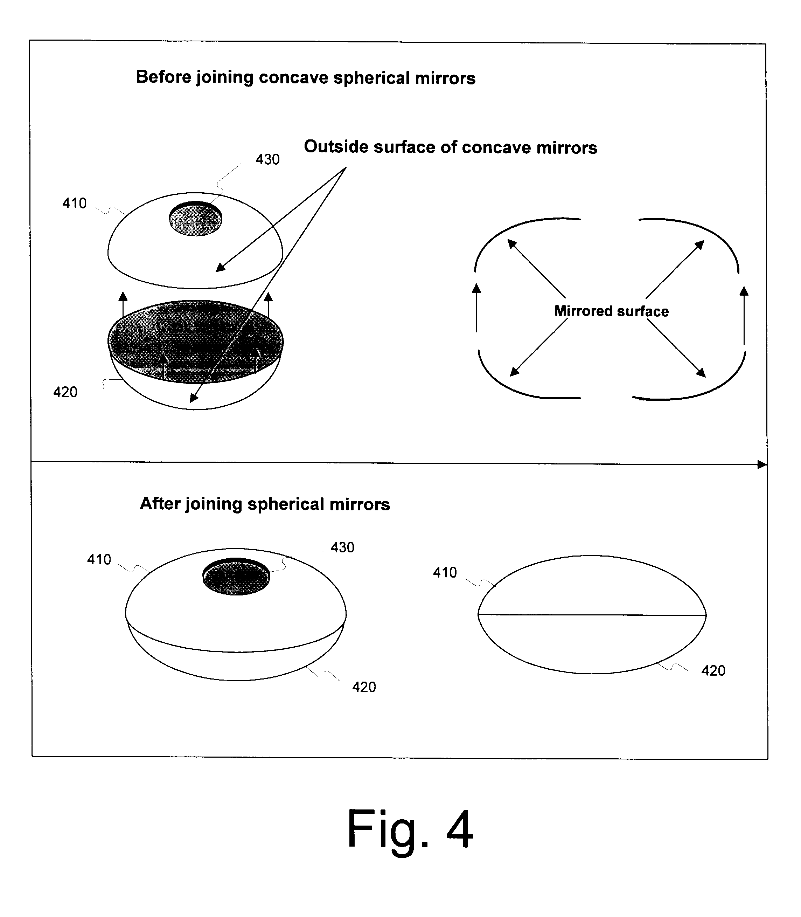

Referring back to Fig. 1, reflector 400 is a device that reflects the displayed image so that a virtual image of the 3D object appears to be suspended in mid-air unsurrounded by the reflector or other apparatus and is able to be viewed by spectators from many different viewing angles up to 360 degrees. The viewing angle may be less than 360 degrees with some types of display devices 200 mentioned above. Reflector 400 may be, for example, a pair of spherical concave mirrors assembled together as shown in Fig. 4. As shown in the top of Fig. 4, the interior surfaces of the concave mirrors 410 and 420 are covered with a reflective material. Preferably. at least one of concave mirrors 410 and 420 has an opening 430 preferably centered with a central axis of the sphere. Opening 430 may be of any size or shape but is preferably circular. Concave mirrors 410 and 420 are joined together so that the mirrored surfaces face one another and the circular edges are aligned. The bottom of Fig. 4 shows two views of the resulting parabolic mirror 440 after joining concave mirrors 410 and 420.

In an alternative embodiment, reflector 400 may be a Fresnel lens. A Fresnel lens is a thin optical lens consisting of concentric rings of segmental lenses that replicates the optics of glass lenses or curved parabolic mirrors. With a Fresnel lens, the optics of the lenses or mirrors are maintained but the bulk, volume, or area of the lenses or mirrors is substantially reduced. In yet another embodiment, other mirror configurations can be used to limit the viewing area. For example, by cutting each concave mirror in half, the viewing angle can be limited to 180 degrees.

Referring again to Fig. 1, user interface device 500 may be a conventional, commercially available force feedback haptic interface device designed to provide force feedback information generated by virtual simulation. User interface device 500 may be a device worn on a hand or fingertip or a freely held pen-like tool or stylus. Other devices may be suitable provided that they operate with appropriate force-feedback sensitivity or resolution so as to allow the spectator to detect and manipulate the image. For example, a very low resolution data glove may be appropriate for a simple volumetric game interface with low resolution but entirely inappropriate for simulating volumetric open-heart surgical procedures where high resolution is desirable. Therefore, user interface device 500 preferably has resolution comparable to the resolution of display device 200. One example of such a device is the PHANToM haptic interface product distributed by SensAble Technologies. Users connect to the PHANToM device by wearing a thimble that tracks the motion of the user's finger tip and exerts pressure on the fingertip to give the user the sensation of touching solid physical objects. Another example is the PHANToM stylus product also by SensAble Technologies.

### C. Process

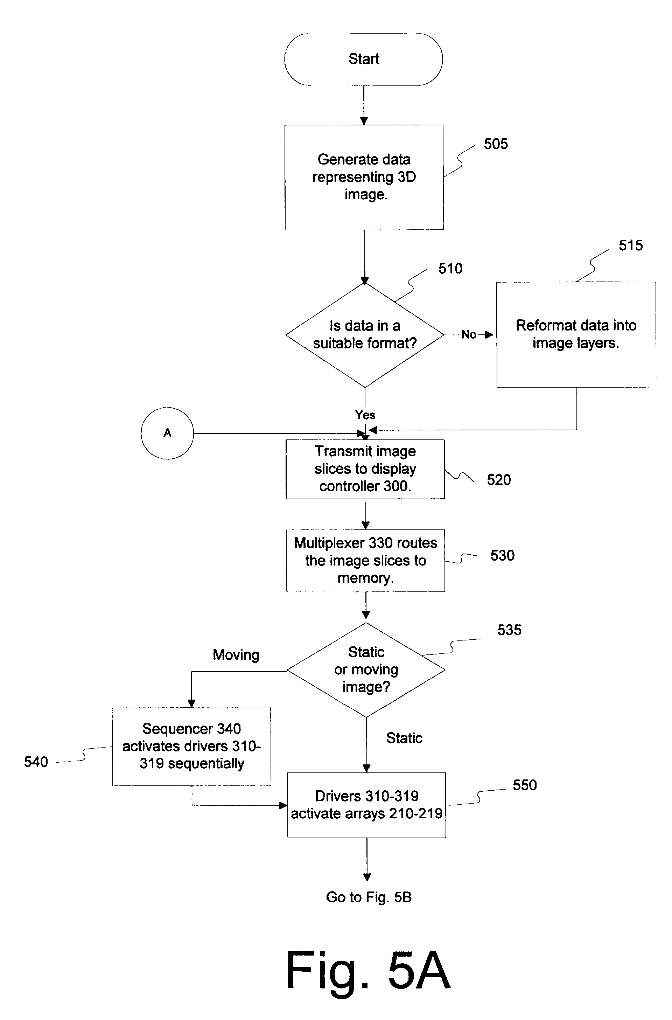

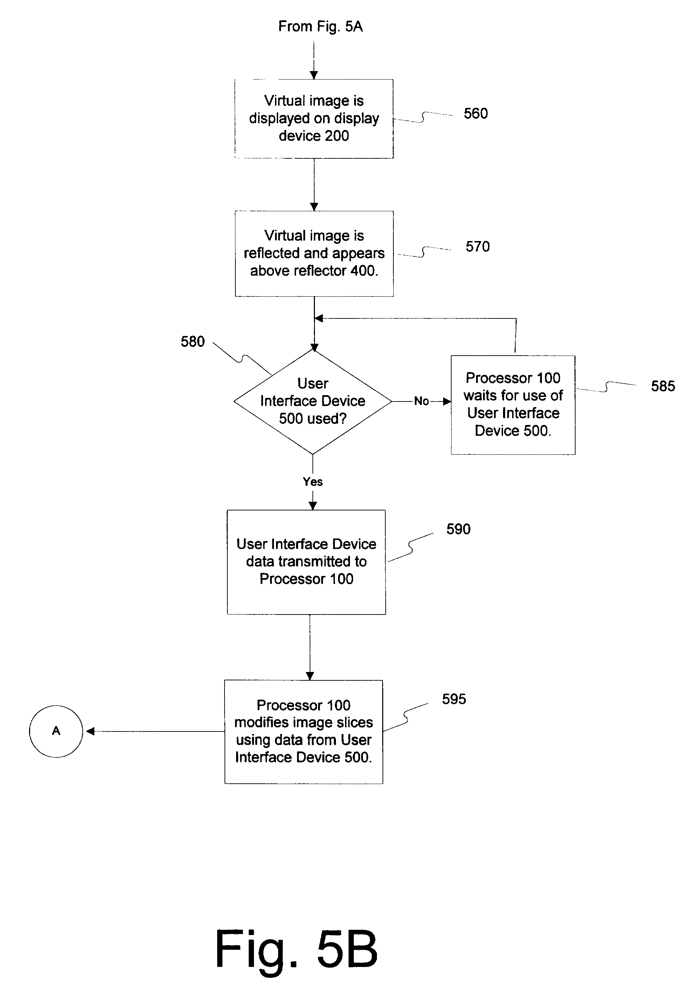

Figs. 5A and 5B illustrate a process for displaying and manipulating a 3D image consistent with the present invention.

To begin, processor 100, or in an alternative embodiment a processor external to processor 100, generates a 3D image (step 505). Processor 100 or the external processor may generate the 3D image using any commercially available 3D graphics software package, such as Silicon Graphics' Cosmo Worlds application or Alias Wavefront's Animator application, provided the resulting 3D image is capable of being displayed using at least three coordinate planes. If the processor generating the 3D image is external to processor 100, the image is stored to a data storage device, such as a hard disk, CD-ROM, or optical storage unit, and transferred to processor 100 using an input/output device such as a disk drive or modem.

If the data representing the 3D image is not in a format suitable for display on display device 200 (step 510), processor 100 reformats the data into image "slices" (step 515). A "slice" is a subset of the image data representing a two-dimensional image layer of the 3D image. The reformatting process may be implemented using one or more software or hardware programs. In the preferred embodiment, however, the reformatting process is implemented using software custom designed to operate specifically with display device 200. Each two-dimensional image slice is displayed using one or more of the arrays of display device 200.

If the data is in a suitable format or after execution of step 515, processor 100 transmits the data slices to display controller 300 (step 520). Multiplexer 330 of display controller 300 selects which of memories 320- 329 receives data from processor 100 (step 530). Each image slice is stored in one or more of memories 320-329. Multiplexer 330 routes the data corresponding to a particular image slice to its corresponding memory 320-329 (step 530). For example, data related to the image slice that is displayed on array 210 is stored in memory 320. Data to be displayed on array 211 is stored using memory 321. For static images, the memory preferably receives data only once. If the image is moving, or is changed by actions of user interface device 400, multiplexer 330 selects which of memory 320- 329 needs to be modified.

Arrays 210-219 may either be all turned on simultaneously or scanned through in a serial fashion (step 535). In serial mode, sequencer 340, as shown in Fig. 3, controls drivers 310- 319 so that arrays 210-219 are activated sequentially (step 540). Preferably, the components of display device 200 are configured so that display device 200 has a response time capable of supporting moving images. For example, to display an animated image at a video frame rate of 30 video frames per second, the entire stack of arrays will be modified 30 times per second. Therefore, for example, if display device 200 is a stack of 5 arrays, display device 200 must operate at a speed fast enough to refresh 150 arrays in a second. With a stack of 10 arrays, display device 200 must refresh 300 arrays per second to display 30 video frames per second.

The display must also have a high light transmission rate. Display technology such as PDLC (polymer dispersed liquid crystal) or Guest Host LCD operate without a polarizer, thus minimizing light absorption. Minimal light absorption is essential as more LEDs or LCDs are stacked.

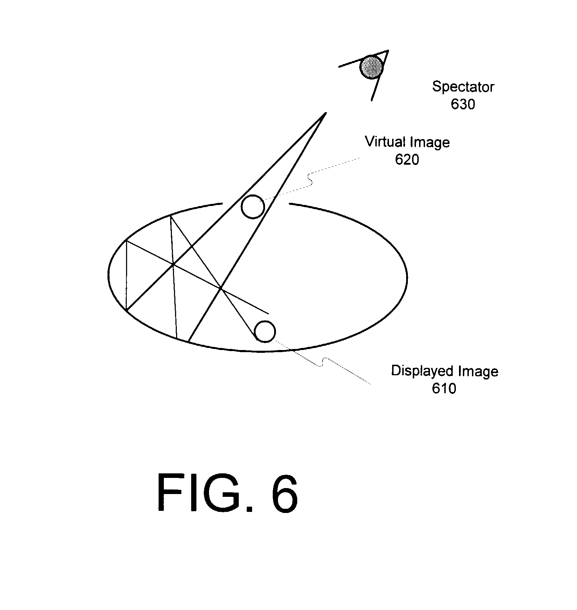

Whether a static or moving image, drivers 310-319 activate arrays 210-219 to display the 3D image (step 550). After display device 200 displays the virtual image (step 560), reflector 400 reflects the image (step 570). Fig. 6 shows the reflection process when reflector 400 is a pair of concave mirrors 410 and 420 as shown in Fig. 4. As shown in Fig. 6, displayed image 610 is reflected off the interior walls of the mirrors and a virtual image 620 appears above the opening to the sphere. The virtual image is unsurrounded and spectator 630 may view virtual image 610 from 360 degrees. The virtual image is also fully referenceable in that the spectator can reference any point in the 3D image.

Spectators may manipulate the virtual image using user interface device 500. User interface device 500 allows users to 'touch' virtual objects by providing force feedback based on the computer-generated virtual image. User interface device 500 is calibrated and aligned to the virtual image so that the user appears to touch the virtual image. If user interface device 500 is used (step 580), movements of user interface device 500 generate data which is transmitted to processor 100 (step 590). Processor 100 modifies the image slices using data from user interface device 500 (step 595). The modified image slices are sent to display control 300 and the process continues from step 520. If user interface device 500 is not used, the image is not modified and processor 100 waits for use of user interface device 500 (step 585).

### D. Conclusion

It will be apparent to those skilled in the art that various modifications and variations can be made in the system and processes of the present invention without departing from the spirit or scope of the invention. The present invention covers the modifications and variations of this invention provided they come within the scope of the appended claims and their equivalents. In this context, equivalents means each and every implementation for carrying out the functions recited in the claims, even those not explicitly described herein.

## Claims

1. A method of displaying a three-dimensional image comprising:
receiving a first set of data representing a three-dimensional image;
projecting a first plurality of light beams based upon the first set of data onto a reflective device; and
reflecting the light beams to focal points above the reflecting device in a manner to display a referenceable three-dimensional image in unsurrounded space.

2. The method of claim 1, further comprising:
receiving signals from a user interface device; and
generating a second set of data based upon the first set of data and the signals from the user interface device.

3. The method of claim 2, further comprising:
projecting a second plurality of points of light onto a reflective device based upon the second set of data.

4. A method of displaying a three-dimensional image comprising:
receiving a first set of data representing a three-dimensional image;
dividing the first set of data into a first plurality of data subsets, each data subset corresponding to a two-dimensional slice of the three-dimensional image;
projecting a first plurality of light beams onto a reflective device in accordance with the first plurality of data subsets; and
reflecting the first plurality of light beams to focal points beyond the reflective device to display a referenceable three-dimensional image in unsurrounded space.

5. The method of claim 4, further comprising:
receiving signals from a user interface device; and
generating a second set of data based upon the first set of data and the signals from the user interface device.

6. The method of claim 5, further comprising:
dividing the second set of data into a second plurality of data subsets, each data subset corresponding to a two-dimensional slice of the three-dimensional image; and
projecting a second plurality of light beams onto the reflective device based upon the second plurality of data subsets.

7. The method of claim 4, wherein the step of projecting a first plurality of light beams comprises:
projecting sequentially each set of light beams to focal points in accordance with the first plurality of data subsets.

8. A method of displaying a three-dimensional image comprising:
receiving a first set of data representing a three-dimensional image;
dividing the first set of data into a first plurality of data subsets, each data subset corresponding to a two-dimensional slice of the three-dimensional image;
activating a plurality of light beams based upon the first plurality of data subsets; and
projecting the plurality of light beams to focal points to display a referenceable three-dimensional image in unsurrounded space.

9. The method of claim 8, further comprising:
receiving signals from a user interface device; and
generating a second set of data based upon the first set of data and the signals from the user interface device.

10. The method of claim 8, further comprising:
dividing the second set of data into a second plurality of data subsets, each data subset corresponding to a two-dimensional slice of the three-dimensional image; and,
activating a plurality of light beams based upon the second plurality of data subsets.

11. The method of claim 8, wherein the step of projecting the plurality of light beams comprises:
projecting sequentially the plurality of light beams in sets of light beams, the sets of light beams corresponding to the data subsets, the light beams projected to focal points in a manner to display a referenceable three-dimensional image in unsurrounded space.

12. An image display apparatus comprising:
a device [300] for receiving a first set of data representing a three-dimensional image;
a first projector [200] for projecting a first plurality of light beams onto a reflective device [400]based upon the first set of data; and
a reflective device [400] for reflecting the light beams to focal points above the reflecting device in a manner to display a referenceable three-dimensional image in unsurrounded space.

13. The apparatus of claim 12, further comprising:
a user interface device [500]; and
a processor [100] programmed to generate a second set of data based upon the first set of data and signals from the user interface device [500].

14. The apparatus of claim 13, further comprising:
a second projector [200] for projecting a second plurality of light beams onto the reflective device [400] based upon the second set of data.

15. The apparatus of claim 14, wherein the processor [100] is programmed to generate a plurality of image layers from the first set of data, each image layer comprising a subset of the first set of data and representing a two-dimensional section of the three-dimensional image. and wherein the projector [200] comprises:
a plurality of arrays of light elements [210-219]; and
a controller [300] for controlling the display of the image layers using the arrays.

16. The apparatus of claim 15, wherein the controller comprises:
a plurality of array drivers [310-319], each array driver controlling the display of one of the image layers on one of the arrays.

17. The apparatus of claim 16, wherein the controller comprises:
a sequencer [340] for causing the plurality of array drivers to display the image layers sequentially.

18. The apparatus of claim 16, further comprising:
a multiplexer [330] for selecting at least one of the plurality of array drivers to reflect a modified first set of data.

19. The apparatus of claim 15, wherein the device for reflecting comprises:
a first parabolic mirror [410] including a mirrored surface on the concave surface of the mirror and having an opening in the center of the mirror; and
a second parabolic mirror [420] including a mirrored surface on the concave surface of the mirror and positioned so that the concave side of the second parabolic mirror [420] faces the concave side of the first parabolic mirror[410].

20. The apparatus of claim 15, wherein the reflective device [400] comprises:
a Fresnel lens.

21. The apparatus of claim 13, wherein the user interface device [500] comprises:
a position detection device for generating interface device position information describing the position of the interface device with respect to the three-dimensional image;
a second processor for computing a second set of data based upon the first set of data to reflect changes in the interface device position information; and
a transmitter for sending the second set of data to the input device.

22. The apparatus of claim 15, wherein the interface device [500] comprises:
a data glove.

23. The apparatus of claim 15, wherein the interface device [500] comprises:
a light pen.

24. The apparatus of claim 13, further comprising:
an image generating means for generating the first set of data representing a three-dimensional image.
